# EUROPEAN PATENT APPLICATION

(11) **EP 1 026 034 A2**
(43) Date of publication of application: **09.08.2000**
(21) Application number: 00830063.4
(22) Date of filing: 28.01.2000
(51) Int. Cl.: B60R 1/00, G02B 26/08

(54) **Infra-red vision system for motor-vehicles, having a matrix of micro-shutters or micro-mirrors**

(30) Priority: 02.02.1999 IT TO990074
(71) Applicant: C.R.F. Societa' Consortile per Azioni, 10043 Orbassano (Torino) (IT)
(72) Inventor: Perlo, Piero, 12048 Sommariva Bosco (Cuneo) (IT); Repetto, Piermario, 10145 Torino (IT); Bigliati, Claudia, 13039 Trino (Vercelli) (IT); Farina, Silvia, c/o C.R.F. Soc.Consortile p.Azioni, 10043 Orbassano (Torino) (IT); Pizzi, Marco, c/o C.R.F. Soc. Consortile p. Azioni, 10043 Orbassano (Torino) (IT)
(74) Representative: Notaro, Giancarlo

(57) **Abstract**

An infrared vision system for motor vehicles comprises optical means of image formation for focusing the infrared image of the scene in front of the vehicle on infrared sensor means (9). The aforesaid optical means of image formation include a matrix (5) of electrostatic laminas (15) used as micro-shutters or micro-mirrors, which are activated selectively and in succession to carry out a scan of the infrared image of the scene in front of the vehicle so as to focus in succession various portions of the image on the aforesaid sensor means (9). The signals issued by the sensor means (9) are processed by electronic means (10) which carry out the reconstruction of the complete image to be displayed.

## Description

The present invention relates to an infrared vision system for motor vehicles, of the type comprising an infrared-radiation detecting device designed to be mounted on the front of a motor vehicle, the device including infrared sensor means designed to issue electrical signals according to the infrared radiation detected, optical means for image formation for focusing the infrared radiation on said sensor means, electronic means for processing the signals issued by the sensor means, and image-displaying means controlled by said electronic means.

The above-mentioned sensor means generally consist, according to the known art, of a matrix of thermal sensors on which the infrared image of the scene that is presented in front of the motor vehicle is focused. The signals coming from the individual sensors of the matrix are sent to the electronic control means, which process the said signals in order to enable display of the image. A drawback of the known systems of the type specified above that have so far been made lies in the fact that the aforesaid sensor means are relatively complex and costly.

The purpose of the present invention is to overcome such a drawback.

In order to achieve the above purpose, the subject of the invention is an infrared vision system of the type referred to above, characterized in that the aforesaid optical means for image formation comprise a matrix of micro-shutters or micro-mirrors, a first optical system operating by transmission and/or reflection for focusing the infrared image on said matrix, and a second optical system, also operating by transmission and/or reflection, for focusing the radiation coming from said matrix of micro-shutters or micro-mirrors on said sensor means,
in which the said matrix of micro-shutters or micro-mirrors is made up of a matrix of electrically conductive, thin-film laminas arranged on a substrate with a matrix of electrodes which are also carried by the substrate, each electrode being associated to one lamina, and each lamina being displaceable from a curved condition of rest to a straightened-out condition in which the lamina adheres electrostatically to the respective electrode and to the substrate following upon application of a voltage between the lamina and the electrode,
the aforesaid system comprising electronic control means designed to cause application of a voltage selectively and in succession between the various laminas and the respective electrodes so as to perform a scan of the image, focusing various portions of the image in succession on said sensor means.

Owing to the above characteristic, instead of making use of sensor means represented by a matrix with a high number of sensors, the system can make use of a single sensor or, at the most, of a small matrix with a very small number of sensors, in that the above-mentioned matrix of micro-shutters or micro-mirrors carries out focusing in succession of the various portions of the image, and does not focus simultaneously the entire image, on the single sensor or on the small matrix of sensors, the electronics for processing the signals issued by the sensors subsequently reconstructing the entire image to be displayed.

It should be noted that the use of electrostatic devices comprising electrically conductive flexible laminas which are displaced from a state of rest to an operating state following upon the application of a voltage between the laminas and the respective electrodes has already been proposed in the past, for example for making low-power and small-sized electrostatic motors suitable for use as actuators in micro-electronics technology applications. An actuator of the type referred to above is, for instance, described in Dyatlov V.L., Konyaskin V.V., Potapov B.S., and Pyankov Y.A., "Prospects of the Employment of Synchrotron Radiation in Film Electrostatic Actuator Technology", Nuclear Instruments and Methods in Physics Research, A359 (1995), Pages 394-395. The laminas making up the micro-shutters or micro-mirrors of the present invention may be made using the above technology. In the case of use of the laminas as micro-shutters, they are applied on a transparent substrate in such a way that each lamina prevents the passage of infrared radiation through the substrate when it is in the operating condition, where it is adherent to the substrate, whilst it allows passage of the radiation when it is in the curved, i.e. resting, condition. On the other hand, in the case of use of laminas in the form of micro-mirrors, each of the latter reflects the infrared radiation, which is then directed onto the sensor means when the micro-mirror is in the operating condition, where it adheres to the substrate, whereas it is inoperative in the curved, i.e. resting, condition.

The invention will now be described with reference to the attached drawings, which are provided purely as a non-limiting example and in which:
Figures 1 and 2 are two schematic cross-sectional views of two alternative embodiments of a vision system according to the invention;
Figure 3 is a perspective view at an enlarged scale of a detail of Figure 1;
Figure 4 is a perspective view at an enlarged scale of a detail of Figure 3;
Figure 5 is a schematic cross-sectional view of a detail of Figure 3 in a first operating condition;
Figure 6 is a variant of Figure 5 corresponding to a different operating condition; and
Figure 7 presents a variant of Figure 5.

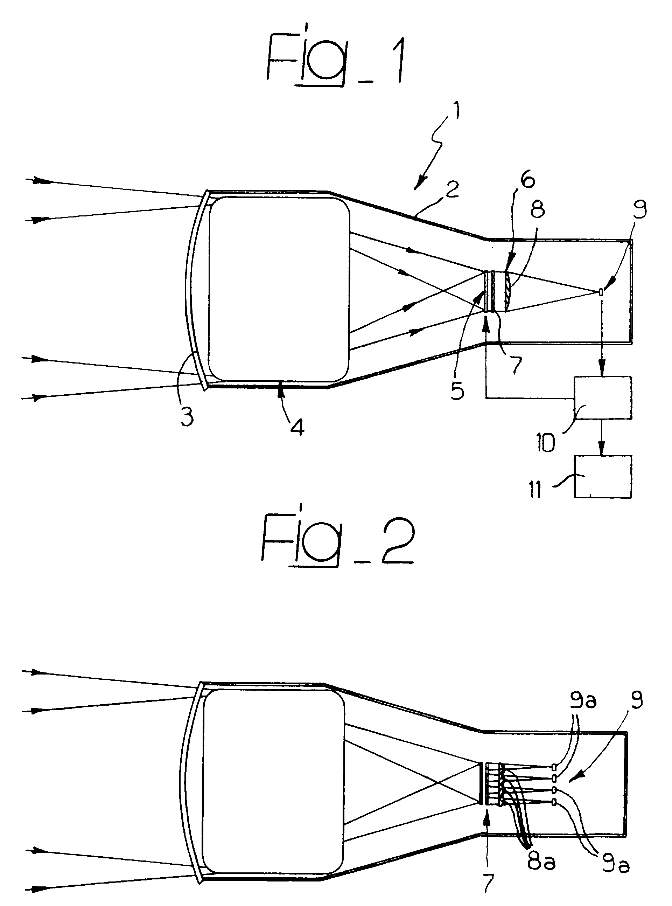

In Figure 1, the reference number 1 designates, as a whole, a device for detecting infrared radiation, designed to be installed on the front of a motor vehicle, for example adjacent to a headlight. The device 1 comprises an outer casing 2 having a front protective window 3 which is transparent to infrared radiation. Arranged inside the casing 2 is a first optical system 4 for image formation, which focuses an infrared image of the scene in front of the vehicle onto a matrix 5 of micro-shutters or micro-mirrors, the function of which will be clarified in what follows. The radiation emitted by the matrix 5 is focused by a second optical system 6, which includes a matrix of refractive or diffractive micro-lenses 7 and a lens 8 onto sensor means 9, which, in the example illustrated in Figure 1, consist of a single non-cooled thermal sensor, for example a pyro-electric sensor, or a resistive bolometer, or a ferro-electric bolometer, or a thermo-electric sensor of a conventional type, or again an IR photodiode, in the case where a high image-scanning speed is required, of which mention will be made hereinafter. The signals coming from the sensor 9 are sent to an electronic control unit 10, which processes them and displays the infrared image of the scene in front of the vehicle onto display means 11 of any type.

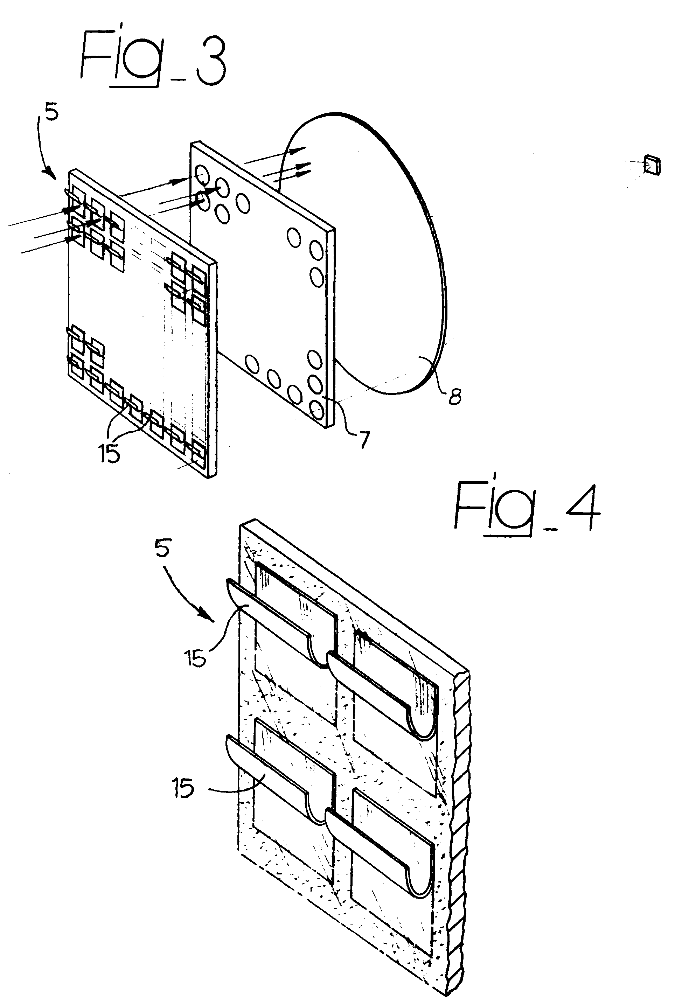

In the embodiments of Figures 1 and 2, the optical systems 4 and 6 function by transmission. In a further embodiment (not illustrated), at least one of the two systems can function by reflection.

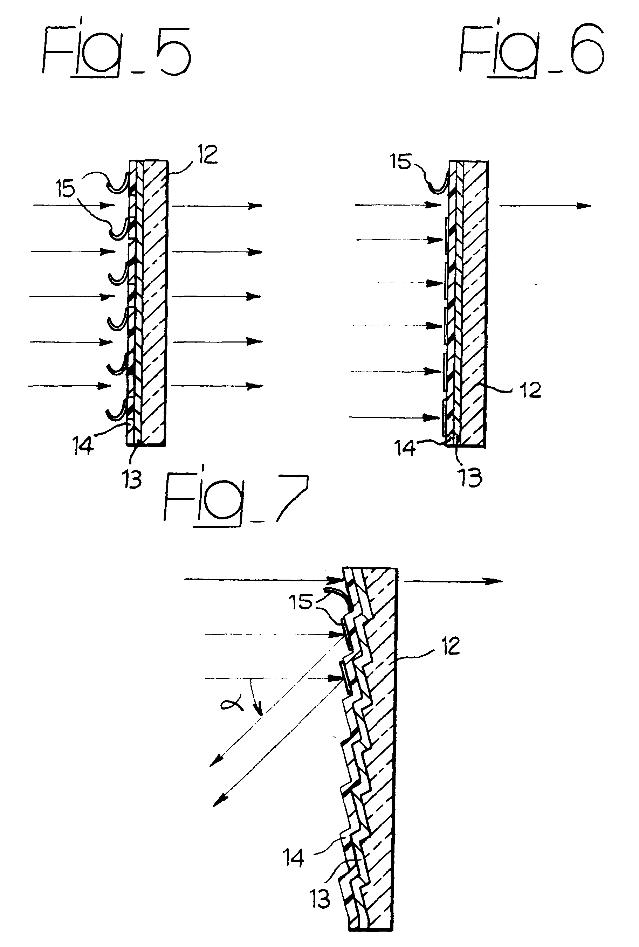

With reference to Figures 3-6, the matrix 5 of micro-shutters or micro-mirrors comprises a substrate 12 which, in the case of use of micro-shutters, consists of a glass lamina or a plastic lamina which has a thickness of a few millimetres and is transparent to infrared radiation. On the surface of the substrate 12 is deposited by evaporation, or spin-coating, or silk-screen printing, or dipping, a layer 13 of conductive material which is transparent to infrared radiation and has a thickness of a few tens or hundreds of nanometres. Subsequently, the conductive layer 13 is isolated by a layer of dielectric or ferro-electric insulator 14, which is transparent to light and the thickness of which may range, for example from 0.1 µm to a few tens of microns. Also this layer may be obtained by silk-screen printing or spin-coating or dipping. Each element of the matrix 5 consists of a lamina 15 in the form of a metal film having a thickness of between a few fractions of a micron and a few micron. Each lamina 15 is fixed at one of its ends to the surface of the substrate 12. A lamina of metal film is used which, in the resting condition, is curved in such a way that if a voltage is not applied, the lamina 15 remains curled up or anyway raised away from the substrate. The dimensions of the film may vary according to the type of application required and the type of matrix of which it forms part. The conductive layer 13 is divided into a plurality of electrodes, each one of which is associated to one of the laminas 15. When a voltage is applied between a given lamina 15 and the respective electrode, the lamina adheres by electrostatic effect to the respective electrode and to the substrate 12 (as illustrated in Figure 6 for the majority of the laminas 15, except for the one that is in the uppermost position). When the voltage applied is interrupted, the lamina 15 returns, as a result of its elasticity, into the undeformed condition illustrated in Figure 5. As may be seen, when each lamina 15 is in the resting condition, it enables passage of the infrared radiation through the respective area of the substrate 12 in the direction of the second optical system 6, which focuses the infrared radiation onto the sensor 9. When, instead, a lamina 15 is in the operating condition, it prevents passage of the infrared radiation through its respective portion of substrate 12.

The electronic control means 10 are designed to control supply of voltage to the laminas 15 and to the respective electrodes in such a way that the various micro-shutters 15 are closed selectively and in succession so as to perform in a relatively short period of time a scan of the infrared image focused by the optical system 4, thereby enabling focusing in succession, via the second optical system 6, of the various portions of the image onto the sensor 9. In this way, the sensor means 9 may be very simple and may, for example, consist of a single sensor, as in the case illustrated in Figure 1, which detects in rapid succession the various portions of the infrared image of the scene in front of the vehicle. The electronic means 10 then carry out processing of the signals coming from the sensor 9 so as to reconstruct the complete image and display it on display means 11.

The matrix of micro-shutters may comprise, for example, 320 x 240 elements which are opened in sequence to carry out scanning of the image.

In the embodiment of Figure 1, the micro-lenses of the matrix 7 correspond in number to the elements of the matrix of micro-shutters.

Where the aim is to reduce the time for acquisition of the complete image, instead of the single sensor 9 it is possible to use a matrix 9 made up of a very small number of sensors, for example 4 x 4 sensors, 9a, as illustrated in Figure 2, onto which the infrared radiation is focused. In this case, the second optical system 6 comprises the matrix 7 of diffractive or refractive micro-lenses and a matrix of lenses 8a corresponding in number to the elements of the matrix of sensors 9 (i.e., 4 x 4 in the example in question).

Figure 7 regards the variant in which the laminas 15 are used as micro-mirrors, instead of as micro-shutters. In this case, the substrate 12 must not be transparent, and is shaped with a staircase-like profile or saw-tooth profile, in such a way that each lamina 15 acts as a mirror, reflecting the infrared radiation towards the second optical system 6 when it is in its operating condition, whereas it does not enable reflection when it is in the curved, i.e., resting, condition. Also in this case, the control electronics 10 causes activation in sequence of the various micro-mirrors 15 to focus the various portions of image in succession onto the sensor means 9.

Also in this case, moreover, the adoption of sensor means 9 of the type illustrated in Figure 2 enables an increase in image-acquisition speed. As compared to the case of Figure 1, if the matrix of sensors 9a has M x M elements, the increase in speed is equal to M², which enables its use in higher-speed applications.

Of course, without prejudice to the principle of the invention, the details of construction and the embodiments may vary widely with respect to what is herein described and illustrated purely for the purpose of providing an example, without thereby departing from the sphere of the present invention.

## Claims

1. An infrared vision system for motor vehicles, comprising an infrared-radiation detecting device (1) designed to be mounted on the front of a motor vehicle, the device including infrared sensor means (9) designed to issue electrical signals according to the infrared radiation detected, optical means (4, 6) for image formation for focusing the infrared radiation on said sensor means (9), electronic means (10) for processing the signals issued by the sensor means (9), and image-displaying means (11) controlled by said electronic means (10),
characterized in that said optical means for image formation comprise a matrix (5) of micro-shutters or micro-mirrors (15), a first optical system (4) operating by transmission and/or reflection for focusing the infrared image of the scene in front of the vehicle onto said matrix (5), and a second optical system (6), also operating by transmission and/or reflection, for focusing the radiation coming from said matrix (5) of micro-shutters or micro-mirrors (15) on said sensor means (9),
in which the said matrix (5) of micro-shutters or micro-mirrors (15) is made up of a matrix (5) of electrically conductive, thin-film laminas (15) arranged on a substrate (12) with a matrix of electrodes (13) which are also carried by the substrate (12), each electrode being associated to one lamina (15), and each lamina (15) being displaceable from a curved condition of rest to a straightened-out condition in which the lamina (15) adheres electrostatically to the respective electrode and to the substrate (12) following upon application of a voltage between the lamina (15) and the electrode (13),
the aforesaid system comprising electronic control means (10) designed to cause application of a voltage selectively and in succession between the various laminas (15) and the respective electrodes (13) so as to perform a scan of the infrared image of the scene in front of the vehicle, focusing various portions of the image in succession on said sensor means (9).

2. A vision system according to Claim 1, characterized in that the said sensor means (9) consist of a single non-cooled thermal sensor of a type chosen from among pyro-electric sensors, resistive bolometers, ferro-electric bolometers, or thermo-electric sensors of a conventional or photonic type.

3. A vision system according to Claim 1, characterized in that the aforesaid sensor means (9) comprise a matrix with a very small number of sensors (9a), preferably with a number of sensors less than or equal to 16 x 16.

4. A vision system according to Claim 1, characterized in that the aforesaid laminas are used as micro-shutters designed to allow the passage of infrared radiation in their resting condition and to prevent its passage in their operating condition.

5. A vision system according to Claim 1, characterized in that the aforesaid laminas (15) are used as micro-mirrors designed to reflect the infrared radiation at an angle α set with respect to the principle optical axis in their operating condition and to prevent this reflection in their resting condition.
